# EUROPEAN PATENT APPLICATION

(11) **EP 2 141 223 A1**
(43) Date of publication of application: **06.01.2010**
(21) Application number: 08741802.6
(22) Date of filing: 06.03.2008
(51) Int. Cl.: C12H 1/00, C02F 1/28, C02F 9/00, B01D 35/04

(54) **DEVICE FOR TREATING AND PURIFYING A LIQUID PRODUCT**

(30) Priority: 28.03.2007 RU 2007111255
(71) Applicant: Obschestvo S Ogranichennoi Otvetstvennostiyu "Eurostandart", Moscow 107-497 (RU)
(72) Inventor: KISTEREV, Valeriy Evgenyevich, Moscow, 105264 (RU); ZHERDEV, Pavel Dmitrievich, Moskovskaya obl., 141021 (RU)
(74) Representative: Sonn & Partner Patentanwälte
(86) International application number: PCT/RU2008/000126
(87) International publication number: WO 2008/118039

(57) **Abstract**

The invention relates to the food industry. Vodka (liquid product) is treated and purifies by passing through a sorbing component mixture which is placed between filtering materials. Each portion of vodka poured from a bottle into a drinking vessel is treated and purified, prior to be consumed, by being pushed by a consumer from the bottle at an optimal speed through a primary filter material, sorbent(s) and a secondary filter material, which are arranged inside or outside the bottle, using the required air excessive pressure in the bottle cavity formed, as necessary, by means of a peristaltic air pump positioned outside the bottle.

## Description

The invention relates to the food industry, in particular to the distillery industry. The invention is intended for the individual treatment and purification of each portion of a liquid product (vodka) poured from the bottle (container) before its consumption by the consumer.

There exists a device for treatment and purification of liquid products (see US patent Nº6193886 dated 27.02.2001), containing a cartridge body connected to the neck of the bottle and filter located therein, and an air supply means.

The imperfection of the existing device is the low efficiency of the cartridge employed, caused by pushing through it of the liquid products with different levels of purification and the impossibility to use the bottles with rigid body.

The technical result achieved by this invention is the elimination of the said imperfections, namely:
- by sequential placement of rough filtering material, sorbents and the fine filtering materials, fixed on the internal surface of the body of the cartridge which is, in essence, an extension of the neck of the bottle, wherein the treated product equally passes through the whole internal space of the cartridge, which
   ensures maximum efficiency of the purification, as well as maximum efficiency in use of the filtering materials and sorbents.
- by using comfortable and original air supply means to provide the required excess of pressure in the internal volume of a non-deformable bottle, and the liquid product therein can be pushed through the filtering materials and sorbents with the required technical parameters, and with a speed of pouring into the drinking vessel, which is acceptable to the consumer.

The said result is achieved by fixing the filter on the internal surface of the body of the device for treatment and purification of a liquid product located in the bottle, containing a cartridge, which comprises the body connected to the neck of the bottle and the filter located on the internal surface of the body, and the air supply means including a peristaltic pump fixed on the bottle, connected to a tube, which is connected to the unit to supply air into the bottle. The air supply unit
may be in the form of a through channel made in the cartridge body or located between the body of the cartridge and the neck of the bottle with an orifice for the tube, communicating through channels made in the internal surface of the cartridge and limited by the outer surface of the neck of the bottle.

The filter may be formed by the sequential placement of a rough filtering material, a sorbent or a mixture thereof, and a fine filtering material. To prevent splashing, the outlet orifice of the body is fitted with a spreader. The device may be in the form of a through channel made in the cartridge body or located between the body of the cartridge and the neck of the bottle with an orifice for the tube, communicating through channels made in the internal surface of the cartridge and limited by the outer surface of the neck of the bottle or an aperture executed in a bottle tightly connected to a tube by means of tightly element. The device may be fitted with a decorative cap fixed on the body by a thread. The body of the cartridge may be hermetically connected to the neck of the bottle using a placement spot with directional internal thread or using a placement spot with a fitting. The placement spot for connecting the body to the neck of the bottle may be made with a fixing holder. The peristaltic pump may consist of an elastic tube fixed on the bottle with an inlet valve and outlet orifice, connected to the air supply tube, and the body fixed on the bottle which can only be turned in one direction, bearing at least one roller interacting
with the elastic ring.

The body of the pump is connected to the bottle by a pawl mechanism, and the drive of the peristaltic pump may be made using a spring with a launch button located on the body, or in electromechanical manner, with an electric motor, back-gear, power unit and a launch button and a power switch located on the body.

The essence of the invention is illustrated by the drawings.
Fig. 1 schematically shows the device with a manual peristaltic pump and the assembly for connecting the body to the cartridge and the neck of the bottle in form of a placement spot with a fitting and a lock holder;
Fig. 2 shows the same with a thread connection of the body of the cartridge to the bottle;
Fig. 3 schematically shows the device with a springdriven peristaltic pump;
Fig. 4 shows the same for a version with a thread connection of the body of the cartridge to the bottle;
Fig. 5 schematically shows the device with an peristaltic air pump qith an electromechanical drive; and Fig. 6 shows the same for another version.

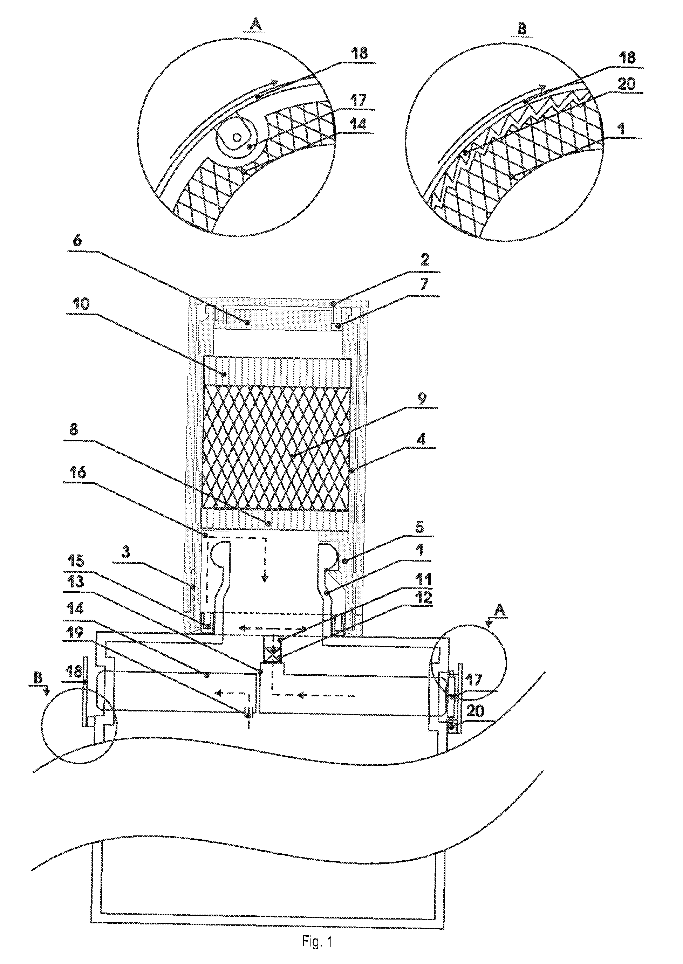

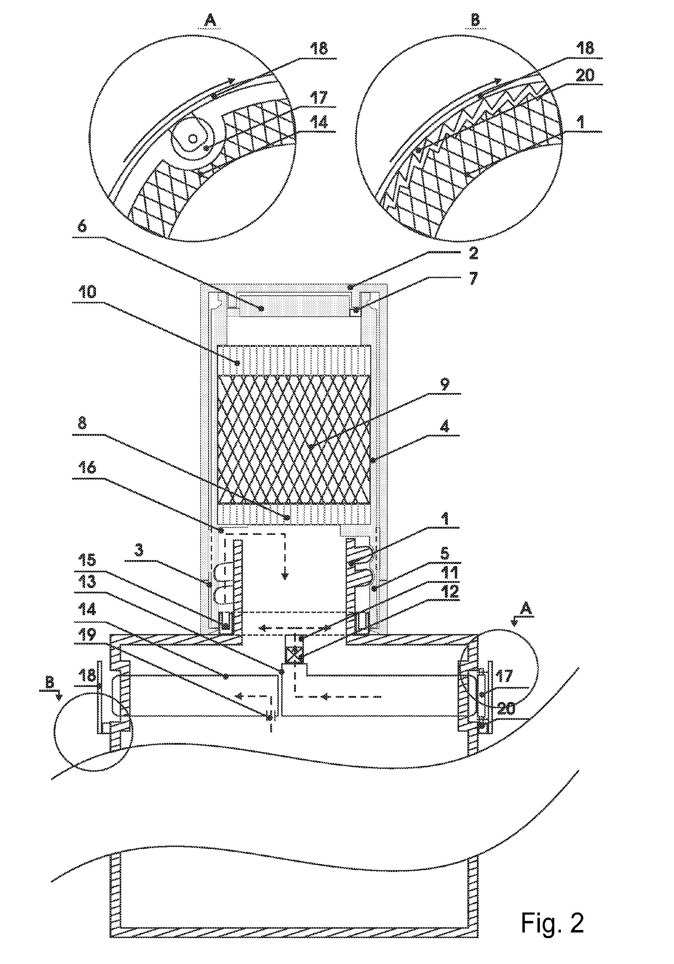

The first example of implementation of the device is shown in Figs. 1 and 2.

The device, besides the vessel 1 for vodka (the bottle), contains three main components: a cartridge with a filter, an air supply assembly and a unit to supply air into the bottle.

The cartridge with the filter comprises a decorative cap 2 with internal thread 3 for screwing onto the body 4 of the cartridge; the body has a placement spot 5 on the neck of the bottle, a restrictive spreader 6 with channels 7 for the vodka flow, a thread on its internal surface 3 to screw the sealing cap and a cavity in which there are sequentially placed a rough filtering material 8, a sorbent 9 or a mixture thereof, and a fine filtering material 10.

The unit to supply air into the bottle consists of an air supply tube 11, connected with its one end through the outlet valve 12 to the outlet orifice 13 of an elastic tube 14, while its other end is connected to an air supply ring 15 and air channels 16, formed in the elements of the body of the cartridge along the external surface of the neck of the bottle, through which the pressurized external air from the pump is supplied into the internal space of the bottle.

The air supply unit for creating of the required pressure in the internal space of the bottle consists of the tube 14 made of an elastic resistant material, which encompasses the bottle on the outside, on which three
rollers 17 roll squeezing it, fit on the body 18 of the pump, forcing the air from the tube through the air supply assembly and into the internal space of the bottle. The external air enters the elastic tube through the pump's inlet 19. A ratchet 20 serves to prevent rotating the body of the pump in the other, undesired direction.

The device shown in Figs. 1 and 2 operates as follows.

A sealed bottle of vodka is taken in hands and opened by unscrewing the decorative cap 2 and is turned upside down over the drinking vessel. The vodka, contained in the bottle is poured to the rough filtering material 8, part thereof, under the effect of gravitational forces, passes through it and enters the space in the cartridge 4 filled with sorbent 9, which provides the required level of vodka treatment. Having passed through the sorbent or a mixture thereof, the vodka is unable to pass through the fine filtering material due to decrease of the air pressure in the interior of the bottle and strong overall resistance of the filtering materials and the sorbent. To push the vodka through the filtering materials and the sorbent, the consumer, holding the bottle with one hand, starts to spin the body 18 of the pump with rollers attached to it. Amounts of the air trapped between the two neighboring rollers 17, through the outlet orifice 13 of the pump, the release valve 12, the air supply tube 11, the air supply ring 15 and the air channels 16,
formed in the elements of the body of the cartridge along the external surface of the neck of the bottle, enter the interior of the bottle.

The air is taken in through the inlet orifice 19 of the elastic tube 14. To prevent suction of the air from the bottle, due to rotating the body of the pump in a different direction, there is provided the ratchet mechanism 20, which blocks the movement of the pump's body in a reverse direction. Having filled the drinking vessel, the consumer stops rotating the body of the pump and turns the bottle with its neck up. The excessive air pressure in the bottle will push part of the vodka from the vessel filled with sorbent, through the filtering material into the space in the body of the cartridge above it, limited by the restrictive spreader 6. Residual pressure is released through the vodka flow channels 7. The restrictive spreader configuration prevents vodka splashes produced by pressure release. The decorative sealing cap is screwed onto the body of the cartridge using the threaded connection, and encapsulates the bottle.

The few remaining vodka above the filter gradually flows back into the bottle under the effect of the gravitational forces. The operation may be repeated as required.

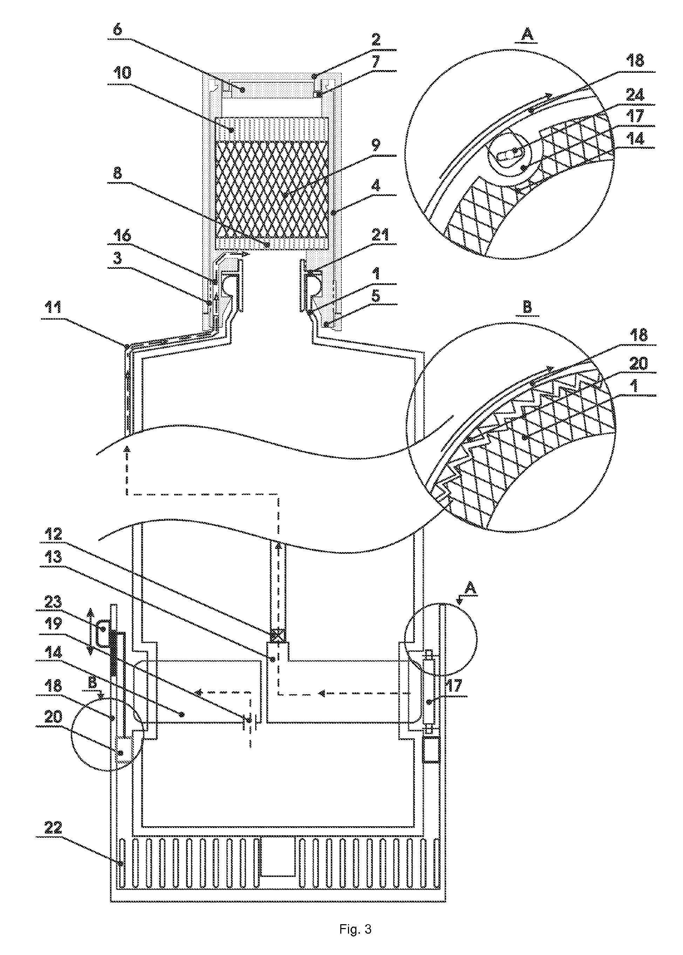

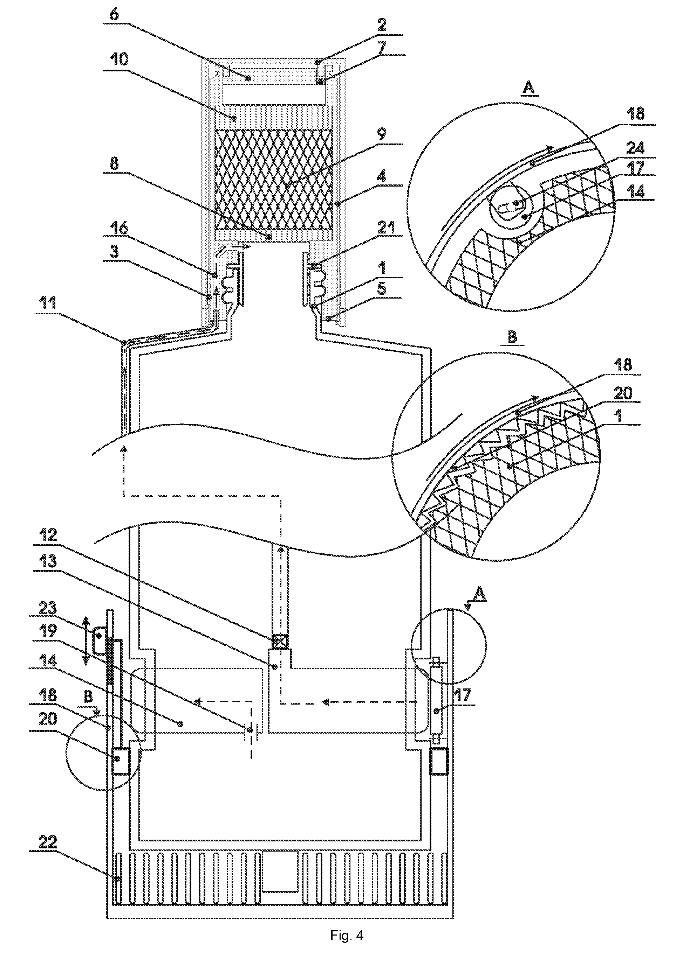

The second example of the device implementation is shown in Figs. 3 and 4. It is distinguished by the air channel being formed in the body of
the cartridge and by the addition of an encapsulating element 21 made of elastic plastic.

The air supply means to create the required pressure inside the bottle is a tube 14 made of resistant elastic material, encircling the exterior of the bottle, on which there roll three rollers 17 fixed on the pump body 18, forcing the air from the elastic tube through the air supply assembly into the bottle. The device is operated by the forces of resilience of a cocked spring 22, one end of which being fixed on the bottle 1, and the other being fixed on the body 18 of the pump. The body of the pump in relation to the bottle is fixed by the ratchet 20, which is enabled to displace vertically along the bottle in the body of the pump using a launch button 23. On pressing the button, the ratchet firmly connected to it is also pushed down, coming out of the holders made on the external surface of the bottle. The spring 22 no longer restrained by the ratchet begins to unfold, spinning the bottle 1 in relation to the body 18.

The device shown in Figs. 3 and 4 is operated as follows.

The bottle of vodka is taken in hands. By rotating the body 18 in relation to the bottle 1, the spring 22 is cocked,
and the movement direction is fixed by the ratchet 20. During the procedure of cocking the spring, the pump is not operational, since the roller 17, due to a cutout 24, does not press the elastic tube 14 hard enough. To press the vodka through filtering materials and the sorbent, the consumer, holding the bottle by the body of the pump 18, presses the launch button 12, comfortably located on it, thereby disengaging the ratchet 20 from the beard on the external surface of the bottle 1. The spring begins to spin the bottle with the elastic tube fixed on it along the rollers fixed on the body of the pump. The roller 17 is displaced in the cutout 22, pressing the elastic tube 14. The air trapped between the neighboring roller, through the outlet orifice 13 of the pump, the outlet valve 12, the air supply tube 11 and the air supply channel 16 in the body 4, enters the internal space of the bottle.

Having filled the drinking vessel, the consumer displaces the launch button 23 to the initial position, stopping the spinning of the bottle and turns it with the neck up. The external air is taken in through the inlet orifice 19.

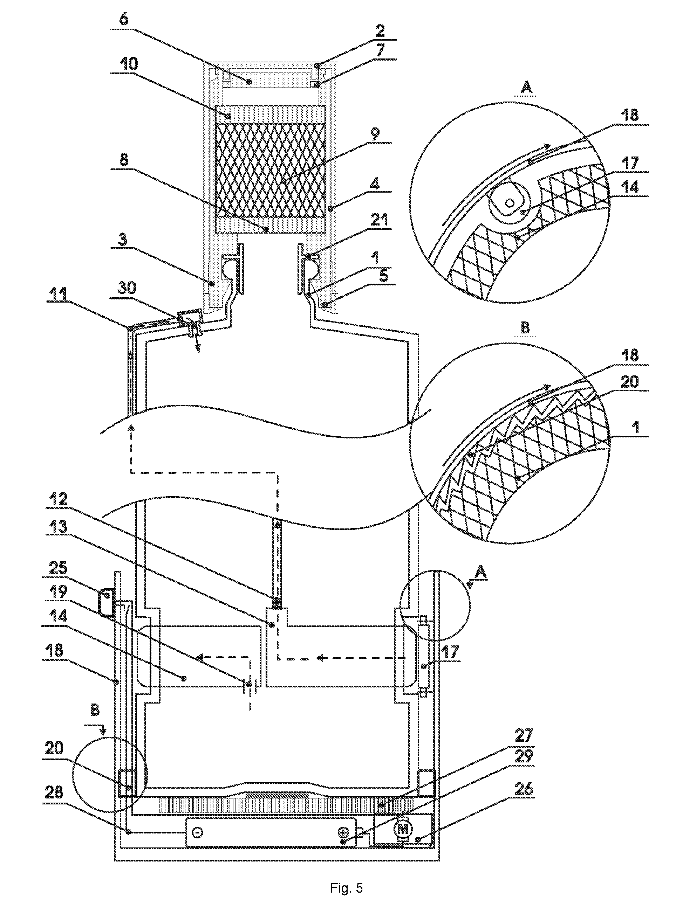

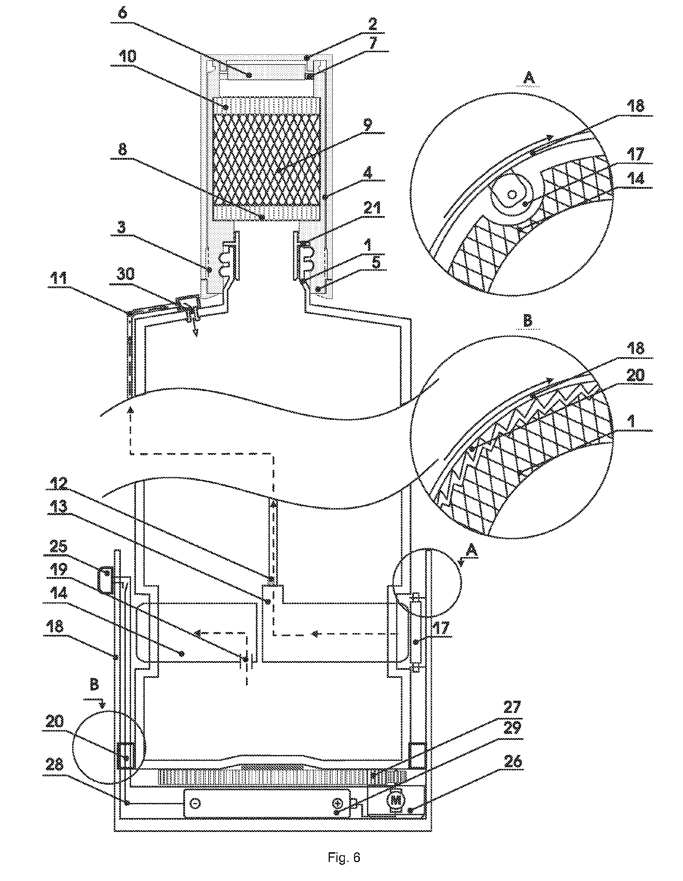

The third example of the device implementation is shown in Figs. 5 and 6.

Its specific feature consists in that the aircondition tube 10 is connected with one end to an exit 13, and the other end, through sealing connection 30, to an aperture in a bottle.

The air supply means for creating the required pressure in the internal space of the bottle is a tube 14 from elastic material encircling the external surface of the bottle, on which roll the three rollers 17, forcing the air from the tube into the air supply assembly. The device is operated by an electromechanical device 27 embedded in the body 18 of the pump.

The device shown in Figs. 5 and 6 is operated as follows.

To force the vodka through the filtering materials and the sorbent, the consumer, holding the bottle in one hand by the body 18 of the pump, turns on the switch 25. The electric motor circuit is closed and, through the mechanical drive 27, begins to spin the bottle with the elastic tube fixed on it along the rollers of the body of the pump. Amounts of air, enclosed between two neighbored rollers, through an exhaust outlet of the pump 13, the final valve 12, an airconducting 10 tube, sealing connection 30 and an aperture in the bottle, into its internal cavity. Having filled the drinking vessel, the consumer turns off the switch 25, the electric drive becomes unpowered and the spinning of the bottle is stopped. Then it is turned with its neck up. The power for the electric motor 26 is provided by a power element 29 through connection of electric wires 28.

The ratchet 20 will prevent the bottle from turning in the wrong direction. The external air is taken in through the inlet orifice 19. The operation may be repeated as required.

Although the above shows only a few preferable versions of implementation of the invention, it is obvious that in accordance with the claims attached, there can also be other versions of implementation, corresponding to the scope of the present device.

## Claims

1. Device for treatment and purification of a liquid product contained in a bottle, including a cartridge, comprising a body connectable to the neck of the bottle and a filter located inside it, an air supply unit, a peristaltic pump, comprising an elastic tube fixed on the bottle with a release valve and an inlet orifice, connected to the air supply tube and a body, fixed on the bottle, with possibility of rotating in one direction only, bearing at least one roller which interacts with the elastic tube.

2. The device according to claim 1, **characterized in that** the air supply unit is made in the body of the cartridge in the form of a through channel.

3. The device according to claim 1, **characterized in that** the air supply unit is formed by a ring sealing element located between the body of the cartridge and the neck of the bottle, hermetically connected to the tube and communicating with channels made in the internal surface of the body of the cartridge and limited by the external surface of the neck of the bottle.

4. The device according to claim 1, **characterized in that** the site of supplying of air is formed by the additional aperture executed in a bottle tightly connected to a tube by means of a sealing element.

5. The device according to any one of claims 1 to 4, **characterized in that** the filter is formed by the sequential placement of a rough filtering material, a sorbent and a fine filtering material.

6. The device according to any one of claims 1 to 4, **characterized in that** the outlet orifice of the body of the cartridge is fitted with a restrictive spreader.

7. The device according to any one of claims 1 to 4, **characterized in that** the body of the cartridge is hermetically connected to the neck of the bottle through a placement spot with directional internal thread.

8. The device according to any one of claims 1 to 4, **characterized in that** the body of the cartridge is hermetically connected to the neck of the bottle using a placement spot with a fitting.

9. The device according to any one of claims 1 to 4, **characterized in that** the assembly by which the body of the cartridge is connected to the neck of the bottle is made with a fixing holder.

10. The device according to any one of claims 1 to 4, **characterized in that** a decorative cap is fixed onto the body.

11. The device according to claim 9, **characterized in that** the body of the cartridge is connected to the cap by a thread with a pilfer-proof cap.

12. The device according to claim 1, **characterized in that** the body of the peristaltic pump is connected to the bottle using a ratchet.

13. The device according to claim 1, **characterized in that** the peristaltic pump is spring-driven, with a launch button located on the body.

14. The device according to claim 1, **characterized in that** the peristaltic pump is made with an electromechanical drive powered by power elements with back gear, equipped with a power switch located on the body.
